(19) Europäisches Patentamt
European Patent Office
Office européen des brevets

(11) EP 1 422 587 B1

(12) **FASCICULE DE BREVET EUROPEEN**

(45) Date de publication et mention
de la délivrance du brevet:
**07.12.2016 Bulletin 2016/49**

(51) Int Cl.:
***G05D 1/08*** *(2006.01)* ***G05D 1/10*** *(2006.01)*

(21) Numéro de dépôt: **03292655.2**

(22) Date de dépôt: **24.10.2003**

(54) **Procédé d'élaboration d'un ordre de commande pour un organe permettant le pilotage d'un projectile girant**

Verfahren zur Herstellung eines Steuerungsbefehles für ein die Steuerung eines drehenden Geschosses ermöglichendes Gerät

Method of drafting a control command for a device allowing the steering of a spinning projectile

(84) Etats contractants désignés:
**AT BE BG CH CY CZ DE DK EE ES FI FR GB GR HU IE IT LI LU MC NL PT RO SE SI SK TR**

(30) Priorité: **08.11.2002 FR 0214073**

(43) Date de publication de la demande:
**26.05.2004 Bulletin 2004/22**

(73) Titulaire: **NEXTER Munitions
78000 Versailles (FR)**

(72) Inventeur: **Lamorlette, Gérard
18000 Bourges (FR)**

(74) Mandataire: **Célanie, Christian
Cabinet Célanie
5 Avenue de Saint Cloud
B.P. 214
78002 Versailles Cedex (FR)**

(56) Documents cités:
**EP-A- 0 905 473 EP-A- 1 006 335
US-A- 4 234 142 US-A- 4 697 768
US-A- 4 797 829**

**Description**

Le domaine technique de l'invention est celui des procédés d'élaboration d'un ordre de commande pour un organe permettant le pilotage en lacet ou en tangage d'un projectile girant notamment d'un projectile d'artillerie tiré à partir d'un canon.

De tels procédés sont mis en oeuvre généralement au sein d'un autopilote ou d'un élaborateur d'ordre d'un projectile et ils permettent le contrôle en vol de l'attitude et de la trajectoire du projectile.

Les projectiles tirés par canon ont théoriquement une trajectoire balistique bien connue. Cependant des facteurs externes (tels le vent, la température et la pression atmosphériques) ou internes (tels la vitesse initiale et les coefficients aérodynamiques) sont susceptibles d'influer sur la trajectoire.

Il en résulte des écarts au niveau de l'impact au sol du projectile qui, à la portée maximale actuelle de l'artillerie de 155 mm (35 Km environ), sont voisins, en écarts-type, de 500 m en portée et de 150 m en direction.

Afin d'améliorer la précision des tirs, diverses solutions sont connues :

On peut ainsi comme décrit par le brevet FR2786561 corriger la trajectoire du projectile en portée par déploiement irréversible d'aérofreins commandés de manière autonome ou depuis le sol. Les écarts-type en précision, sont alors, à 35 Km de l'ordre de la centaine de mètres en portée comme en direction.

On peut également, comme décrit par le brevet EP905473, contrôler d'une façon autonome et continue la trajectoire en commandant la rotation (braquage) de gouvernes aérodynamiques à partir d'un autopilote situé à bord du projectile.

Les écarts-types en précision peuvent être réduits à l'ordre de la dizaine de mètres en portée comme en direction. De plus, il est alors possible en utilisant l'effet planant, d'accroître de manière notable la portée maximale (pouvant dépasser 65 km sans propulsion additionnelle ni modification de l'arme).

Les projectiles totalement autonomes en vol qui appartiennent à la seconde famille décrite ci-dessus se localisent eux-mêmes au cours du vol, au moyen d'un dispositif de positionnement par satellite (plus connu sous le nom de dispositif GPS ou "Global Positionning System"). Le projectile reçoit avant tir une programmation qui lui indique les coordonnées de la cible. Il détermine lui-même sa position réelle en vol, il élabore au moyen d'algorithmes appropriés les ordres de commande et il met en oeuvre les moyens de contrôle de la trajectoire lui permettant d'atteindre la cible définie par ses coordonnées.

Les contraintes de conception (tenue à l'accélération) conduisent généralement à adopter pour ces projectiles autonomes à trajectoire contrôlée une architecture aérodynamique du type « canard » caractérisée par un empennage arrière fixe et par des gouvernes braquables situées à l'avant du projectile. Une telle architecture est décrite par exemple par le brevet EP905473.

La stabilité du vol du projectile est théoriquement assurée par la configuration aérodynamique et non par un effet gyroscopique comme dans un obus conventionnel.

Toutefois, des imperfections aérodynamiques non reproductibles, ainsi que les tourbillons générés par l'incidence, conduisent à un mouvement aléatoire d'autorotation, en général assez lent (inférieur à 10 t/s), autour de l'axe de roulis. Par ailleurs les algorithmes de commande classiques, dans lesquels les ordres de commande en lacet et en tangage ne dépendent que des consignes et des mesures inertielles respectivement en lacet et tangage, conduisent, pour les vitesses angulaires de roulis pouvant être atteintes, à choisir des moteurs de commande des braquages des gouvernes, dont les caractéristiques dynamiques soient compatibles de la vitesse maximale de roulis possible, par exemple un moteur de fréquence propre de 100 Hz est nécessaire pour une vitesse de roulis de 10 t/s. De plus, des mouvements angulaires parasites du projectile, en lacet et en tangage, dus aux couplages gyroscopiques, apparaîtront. Ces mouvements angulaires parasites, très mal amortis, génèrent des obliquités préjudiciables à un bon comportement balistique du projectile et qui se traduisent par une réduction de quelques kilomètres de la portée maximale du projectile.

Une solution utilisée sur certains missiles, qui permet de supprimer les couplages, consiste à piloter le projectile en roulis, c'est-à-dire, à appliquer des ordres permettant de compenser les moments aérodynamiques parasites de roulis et soit d'annuler la vitesse angulaire de roulis, soit de maintenir constant l'angle de roulis. Cependant il est connu que le pilotage en roulis d'un projectile à gouvernes « Canard » n'est possible qu'à la condition de découpler en rotation l'empennage stabilisateur (montage sur roulements par exemple) afin de supprimer les moments aérodynamiques d'interaction qui s'appliquent sur l'empennage et qui s'opposent aux moments de roulis créés par les braquages différentiels des gouvernes « Canard ». Un tel dispositif mécanique de découplage se révèle, pour un projectile tiré canon, comme particulièrement fragile et coûteux. En outre, l'adjonction d'une boucle de pilotage en roulis se traduit par une augmentation du coût de la fonction « contrôle du vol ».

Le brevet US-4234142 décrit un missile dans lequel le roulis est piloté et concerne surtout le couplage croisé de l'asservissement pour le roulis avec l'asservissement pour la direction qui regroupe le tangage et le lacet pilotés en parallèle. Il n'est prévu d'utiliser des paramètres de tangage en plus des paramètres de lacet et de roulis pour piloter le lacet et d'utiliser des paramètres de lacet en plus de paramètres de tangage et de roulis pour piloter le tangage.

Les brevets US-4797829 et 4697768 concernent tous deux le pilotage d'avions.

C'est le but de l'invention que de proposer un procédé d'élaboration d'un ordre de commande pour un organe permettant le pilotage en lacet et/ou en tangage, procédé permettant d'assurer une précision et une fiabilité du tir meilleure que celles obtenues avec les procédés connus.

Le procédé selon l'invention permet d'adopter une configuration à empennage arrière fixe, donc plus rustique et résistant mieux aux contraintes de tir, tout en assurant de façon fiable une portée élevée et une excellente précision.

Par ailleurs, le procédé selon l'invention utilise des paramètres de vol du projectile (vitesses de rotations, accélérations) qui peuvent être mesurés par une centrale inertielle à coût réduit sans dégradation de la précision.

Ainsi, l'invention a pour objet un procédé d'élaboration d'au moins un ordre de commande pour un organe permettant le pilotage en lacet d'un projectile girant, procédé dans lequel l'ordre de commande provoque une modification d'un paramètre de pilotage en lacet du projectile, paramètre que l'on cherche à maîtriser, procédé dans lequel on détermine une accélération de consigne en lacet $\gamma_{LC}$

procédé dans lequel on mesure :

- l'accélération en lacet $\gamma_L$,
- la vitesse de rotation du projectile par rapport à l'axe de lacet r,
- la vitesse de rotation du projectile par rapport à l'axe de tangage q, et
- la vitesse angulaire de roulis p du projectile, procédé dans lequel l'ordre de commande est évalué comme la somme :
- d'un terme statique $K_C\gamma_{LC} - K\gamma_L$ où les constantes $K_C$ et K sont des gains de correction constants, K étant le gain statique et $K_c$-K l'avance de phase recherchée pour la correction, et
- d'un terme dynamique $-\mu r - v_p pq$ où les constantes $\mu$ et $v_p$ sont des gains dynamiques qui dépendent de la géométrie du projectile et des conditions de vol de celui-ci.

Le procédé selon l'invention prévoit ainsi d'élaborer l'ordre de commande d'un organe influant sur le paramètre de pilotage visé en introduisant dans la commande relative au tangage des termes liés au lacet et à la vitesse de roulis et inversement en introduisant dans la commande relative au lacet des termes liés au tangage et à la vitesse de roulis.

Une telle modification permet de prendre en compte dans chaque voie de commande les couplages tangage/lacet ainsi que la vitesse de roulis. Cette prise en compte se fait dans une certaine mesure qui sera quantifiée avec des coefficients appropriés, liés notamment aux caractéristiques de l'organe commandé, et notamment à la géométrie du projectile ou aux conditions du tir.

Avantageusement, lorsque l'ordre de commande comprend un terme intégral proportionnel à l'intégrale en fonction du temps des écarts entre les intensités mesurées et de consigne du paramètre de lacet à maîtriser, on introduit dans le terme intégral relatif au paramètre de lacet un terme correctif de couplage qui est proportionnel à la vitesse angulaire du projectile et au terme intégral relatif au paramètre de lacet.

Avantageusement encore, l'ordre de commande est une consigne d'angle de braquage ($\delta_{LC}$, $\delta_{TC}$) pour une ailette de pilotage en lacet, la modification de la consigne de l'angle de braquage provoquant une modification d'un paramètre de pilotage qui est l'accélération angulaire ($\gamma_L$, $\gamma_T$) du projectile suivant l'axe de lacet dans un repère lié au projectile, les dérivées par rapport au temps desdites accélérations étant les vitesses de rotation du projectile (r, q) autour des axes de lacet, les angles de braquage s'exprimant ainsi de la façon suivante:

consigne d'angle de braquage en lacet:

$$\delta_{LC} = H \ S(\gamma_L) + K_C \ \gamma_{LC} - K \ \gamma_L - (\mu r + v_p pq)$$

la variable $S(\gamma_L)$ des termes intégraux étant obtenue par intégration des fonctions suivantes :

$$dS(\gamma_L)/dt = \gamma_{LC} - \gamma_L + p \ S(\gamma_T)$$

expressions dans lesquelles: H, $K_c$, K, $\mu$ et $v_p$ sont des constantes qui dépendent de la géométrie du projectile et des conditions de vol de celui ci,

$\gamma_{LC}$ étant la consigne d'accélération à communiquer au projectile suivant les axes de lacet, ces consignes étant fournies par une loi de guidage.

Selon une caractéristique de l'invention, l'ordre de commande est une tension électrique de commande ($U_L$,

$U_T$) d'un motoréducteur d'entraînement d'une ailette de pilotage en lacet, la modification de cette tension provoquant une modification d'un paramètre de pilotage qui est un angle de braquage ($\delta_L$, $\delta_T$) de l'ailette considérée, les dérivées par rapport au temps desdits angles de braquage étant notées ($\delta'_L$, $\delta'_T$), le procédé étant également caractérisé en ce que l'on introduit dans l'évaluation de la tension électrique de commande de l'ailette de pilotage en lacet un terme statique correctif de couplage qui est proportionnel à la vitesse angulaire de roulis et également proportionnel à l'angle de braquage en lacet et en ce qu'on introduit également dans le terme statique un coefficient correctif du gain statique qui est proportionnel au carré de la vitesse angulaire de roulis et à l'angle de braquage en lacet, les tensions de commande s'exprimant ainsi de la façon suivante:

tension de commande de l'ailette de pilotage en lacet :

$$u_L = h\ S(\delta_L) + k_C\ \delta_{LC} - (k - \lambda\ p^2)\ \delta_L + p(K_E + \mu_G)\ \delta_T - \mu_G\ \delta'_L + 2\ \lambda\ p\ \delta'_T$$

la variable $S(\delta_L)$ des termes intégraux étant obtenue par intégration des fonctions suivantes :

$$dS(\delta_L)/dt = \delta_{LC} - \delta_L + p\ S(\delta_T)$$

expressions dans lesquelles: h, $k_c$, k, $\mu_G$, $K_E$ et $\lambda$ sont des constantes qui dépendent du motoréducteur utilisé et des inerties commandées,
$\delta_{LC}$ étant la consigne d'angles de braquage à commander en lacet, ces consignes étant fournies par un moyen d'élaboration de consigne.

Avantageusement, les consignes d'angles de braquage $\delta_{LC}$ à commander en lacet sont élaborées conformément au procédé selon la revendication 3.

L'invention a également pour objet un procédé d'élaboration d'au moins un ordre de commande pour un organe permettant le pilotage en tangage d'un projectile girant, procédé dans lequel l'ordre de commande provoque une modification d'un paramètre de pilotage en tangage du projectile, paramètre que l'on cherche à maîtriser, procédé dans lequel on détermine l'accélération de consigne en tangage $\gamma_{TC}$ procédé dans lequel on mesure :

- l'accélération en tangage $\gamma_T$,
- la vitesse de rotation du projectile par rapport à l'axe de lacet r,
- la vitesse de rotation du projectile par rapport à l'axe de tangage q, et
- la vitesse angulaire de roulis p du projectile, procédé dans lequel l'ordre de commande est évalué comme la somme :
- d'un terme statique $K_C\gamma_{TC}$ - $K_{\gamma T}$ où les constantes $K_C$ et K sont des gains de correction constants, K étant le gain statique et $K_c$-K l'avance de phase recherchée pour la correction, et
- d'un terme dynamique $-\mu q - v_p pr$ où les constantes $\mu$ et $v_p$ sont des gains dynamiques qui dépendent de la géométrie du projectile et des conditions de vol de celui-ci.

Avantageusement, lorsque l'ordre de commande comprend un terme intégral proportionnel à l'intégrale en fonction du temps des écarts entre les intensités mesurées et de consigne du paramètre de tangage à maîtriser, on introduit dans le terme intégral relatif au paramètre de tangage un terme correctif de couplage qui est proportionnel à la vitesse angulaire du projectile et au terme intégral relatif au paramètre de tangage.

Selon une caractéristique de l'invention, l'ordre de commande est une consigne d'angle de braquage ($\delta_{TC}$) pour une ailette de pilotage en tangage, la modification de la consigne de l'angle de braquage provoquant une modification d'un paramètre de pilotage qui est l'accélération angulaire ($\gamma_T$) du projectile suivant l'axe de tangage dans un repère lié au projectile, les dérivées par rapport au temps desdites accélérations étant les vitesses de rotation du projectile (r, q) autour des axes de tangage, les angles de braquage s'exprimant ainsi de la façon suivante:

consigne d'angle de braquage en tangage:

$$\delta_{TC} = H\ S(\gamma_T) + K_C\ \gamma_{TC} - K\ \gamma_T + (\mu q - v_p pr)$$

la variable $S(\gamma_T)$ des termes intégraux étant obtenue par intégration des fonctions suivantes :

$$dS(\gamma_T)/dt = \gamma_{TC} - \gamma_T - p\ S(\gamma_L)$$

expressions dans lesquelles: H, $K_c$, K, $\mu$ et $\nu_p$ sont des constantes qui dépendent de la géométrie du projectile et des conditions de vol de celui ci,

$\gamma_{TC}$ étant la consigne d'accélération à communiquer au projectile suivant les axes de tangage, ces consignes étant fournies par une loi de guidage.

L'invention permet alors de déterminer les consignes de braquage destinées aux gouvernes canard du projectile à partir d'une loi de guidage. Cette loi de guidage ne fait pas l'objet de la présente invention. Elle fournit de façon classique à l'aide d'un algorithme approprié les consignes d'accélérations en lacet et tangage à communiquer au projectile pour qu'il puisse atteindre une cible donnée.

La loi de guidage pourra par exemple être une loi de navigation proportionnelle.

Dans une seconde étape, l'invention consiste à élaborer les tensions électriques de commande des motoréducteurs d'entraînement des gouvernes de lacet et tangage.

Selon une autre caractéristique de l'invention, l'ordre de commande est une tension électrique de commande ($U_T$) d'un motoréducteur d'entraînement d'une ailette de pilotage en tangage, la modification de cette tension provoquant une modification d'un paramètre de pilotage qui est un angle de braquage ($\delta_T$) de l'ailette considérée, les dérivées par rapport au temps desdits angles de braquage étant notées ($\delta'_T$), le procédé étant également caractérisé en ce que l'on introduit dans l'évaluation de la tension électrique de commande de l'ailette de pilotage en tangage un terme statique correctif de couplage qui est proportionnel à la vitesse angulaire de roulis et également proportionnel à l'angle de braquage en tangage et en ce qu'on introduit également dans le terme statique un coefficient correctif du gain statique qui est proportionnel au carré de la vitesse angulaire de roulis et à l'angle de braquage en tangage, les tensions de commande s'exprimant ainsi de la façon suivante:

tension de commande de l'ailette de pilotage en tangage :

$$u_T = h\ S(\delta_T) + k_C\ \delta_{TC} - (k-\lambda\ p^2)\ \delta_T - p(K_E + \mu_G)\ \delta_L - \mu_G\ \delta'_T$$
$$- 2\ \lambda\ p\ \delta'_L$$

la variable $S(\delta_T)$ des termes intégraux étant obtenue par intégration des fonctions suivantes :

$$dS(\delta_T)/dt = \delta_{TC} - \delta_T - p\ S(\delta_L)$$

expressions dans lesquelles: h, $k_c$, k, ($\mu_G$, $K_E$ et $\lambda$ sont des constantes qui dépendent du motoréducteur utilisé et des inerties commandées,

$\delta_{TC}$ étant la consigne d'angles de braquage à commander en tangage, ces consignes étant fournies par un moyen d'élaboration de consigne.

Avantageusement, la consigne d'angles de braquage $\delta_{TC}$ à commander tangage est élaborée conformément au procédé selon la revendication 8.

Le terme intégral proportionnel permet d'une façon classique dans la technique des asservissements d'augmenter la précision de la commande de l'organe.

Conformément à l'invention le terme intégral d'une voie donnée de commande (tangage ou respectivement lacet) est modifié de façon à faire encore intervenir un coefficient de couplage tangage/lacet qui est lié à la vitesse de roulis ainsi qu'au terme intégral de l'autre voie (lacet ou respectivement tangage).

Afin de faciliter l'exposé du procédé selon l'invention, la séquence d'obtention de l'ordre de pilotage va être séparée et étudiée en deux étapes successives.

Dans une première étape, l'invention consiste à élaborer les consignes d'angles de braquage des gouvernes ($\delta_{LC}$, $\delta_{TC}$) respectivement en lacet et tangage.

Ainsi, à partir des consignes d'accélérations en lacet et tangage données par une loi de guidage on élaborera selon l'invention :

Tout d'abord les consignes de braquages des gouvernes de pilotage en lacet et en tangage,

Ensuite à partir des dites consignes de braquage, on élaborera les tensions de commande des motoréducteurs actionnant lesdites gouvernes.

Les figures des dessins sont décrites brièvement ci-après. D'autres avantages de l'invention apparaîtront à la lecture de la description qui va suivre de modes particuliers de réalisation, description faite en référence aux dessins annexés et dans lesquels :

- la figure 1 est une vue en perspective externe d'un projectile équipé d'un autopilote mettant en oeuvre le procédé selon l'invention,
- la figure 2 est un organigramme schématisant le fonctionnement d'un procédé d'élaboration des consignes de braquage selon l'art antérieur,
- la figure 3 est un organigramme schématisant le fonctionnement d'un procédé d'élaboration des consignes de braquage selon l'invention,
- la figure 4 est un organigramme schématisant le fonctionnement d'un procédé d'élaboration des tensions de commande de motoreducteurs de gouvernes selon l'art antérieur,
- la figure 5 est un organigramme schématisant le fonctionnement d'un procédé d'élaboration des tensions de commande de motoreducteurs de gouvernes selon l'invention,
- les figures 6 et 7 sont des courbes comparant, pour deux vitesses de rotation du projectile, les réponses en braquage obtenues avec le procédé selon l'invention et avec les procédé connus.

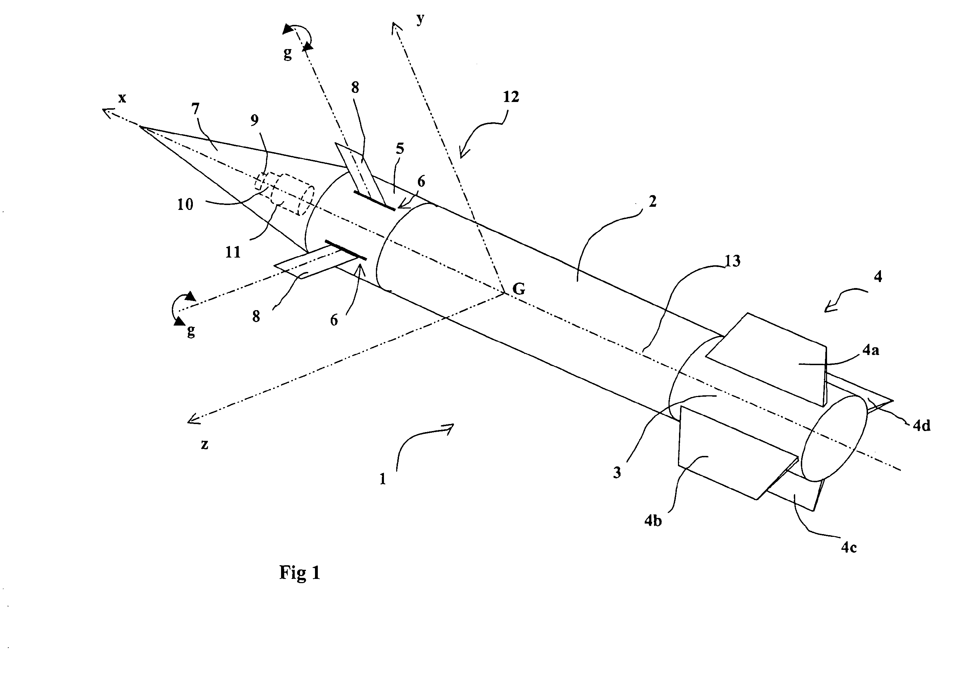

En se reportant à la figure 1, un projectile 1 d'artillerie planant comporte un corps 2 à l'intérieur duquel est logée une charge utile (non représentée), par exemple un chargement explosif ou un chargement de sous munitions.

Le corps 2 se termine par une portion arrière 3 qui pourra renfermer un propulseur ou bien un générateur pyrotechnique permettant de diminuer la traînée de culot (de tels générateurs sont plus connus sous la dénomination anglo saxonne de "base bleed").

La portion arrière 3 porte un empennage cruciforme 4 formé de quatre ailettes 4a, 4b, 4c et 4d fixes. Ces ailettes seront par exemple réalisées sous la forme de tôles d'acier enroulées autour du corps du projectile et se déploieront à la sortie du tube de l'arme sous l'effet de leur élasticité (voir notamment le brevet DE4025515).

Le corps 2 porte à sa partie avant un dispositif de pilotage 5 qui comprend quatre gouvernes canard 8 cruciformes qui sont déployées au travers de fentes 6 aménagées sur le corps du projectile. Ici seules 2 gouvernes sont visibles. Les gouvernes sont associées deux par deux, chaque paire de gouverne matérialisant un plan de pilotage (tangage ou lacet).

Les gouvernes 8 sont commandées en rotation par des motoreducteurs (non représentés). La rotation de chaque gouverne se fait autour d'un axe g sensiblement parallèle au bord d'attaque de la gouverne et suivant une direction radiale du projectile.

Le projectile se termine à sa partie avant par une ogive 7 qui renferme un calculateur électronique 11 assurant le guidage et le pilotage. L'ogive renferme également une centrale inertielle 10 et un dispositif de positionnement par satellite (GPS) 9.

Le projectile 1 est tiré par un canon d'artillerie. Des moyens non représentés permettent le tir en réduisant la vitesse de rotation communiquée au projectile (ceinture dérapante par exemple) et d'autres moyens assurent le maintien puis la libération de l'empennage arrière 4 ainsi que des gouvernes avant 8. On pourra se reporter au brevet EP905473 pour une description plus complète de ces moyens qui ne forment pas l'objet de la présente invention.

Un repère géométrique 12 orthonormé lié au projectile est représenté sur la figure 1. Ce repère comprend un axe Gx confondu avec l'axe 13 du projectile, un axe Gy qui est l'axe de tangage et un axe Gz qui est l'axe de lacet. Le projectile est soumis sur sa trajectoire à des vitesses et à des accélérations le long des trois axes ainsi définis. Une action sur les gouvernes 8 permet de modifier les accélérations auxquelles est soumis le projectile et de corriger ainsi sa trajectoire.

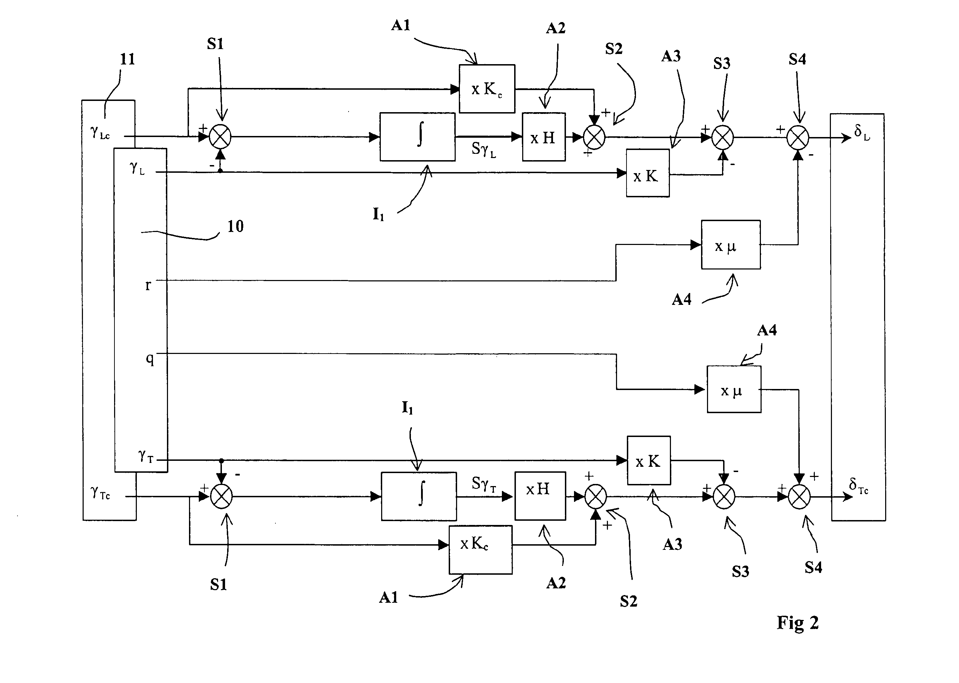

Un procédé de pilotage connu d'un tel projectile est schématisé sur la figure 2.

Le calculateur électronique 11 élabore des consignes $\gamma_{LC}$ et $\gamma_{TC}$ d'accélérations souhaitées suivant les directions de lacet ($\gamma_{LC}$) et de tangage ($\gamma_{TC}$). Cette élaboration se fait d'une façon classique par une loi de guidage, par exemple la loi de navigation proportionnelle, à partir des informations relatives à la localisation de la cible, de celles relatives à la localisation du projectile et des données de vitesse et d'accélération du projectile.

Ces consignes en accélération doivent être traduites dans le calculateur 11 en consignes d'angles de braquage des gouvernes 8 de lacet et de tangage (angle de consigne de braquage en lacet : $\delta_{LC}$; angle de consigne de braquage en tangage : $\delta_{TC}$).

La loi de pilotage classique utilise les mesures d'accélérations en lacet ($\gamma_L$) et tangage ($\gamma_T$) effectuées en continu par la centrale inertielle 10. Elle utilise aussi les mesures effectuées par cette même centrale inertielle des vitesses de rotation du projectile 1 par rapport à l'axe de lacet (vitesse notée r ) et par rapport à l'axe de tangage (vitesse notée q).

L'angle de braquage à commander en lacet s'écrit ainsi sous la forme de la sommé :

$$\delta_{LC} = H\ S(\gamma_L) + (K_C\ \gamma_{LC} - K\ \gamma_L) - \mu r$$

Avec $S(\gamma_L)$ qui est la solution de l'équation intégrale :

$$dS(\gamma_L)/dt = \gamma_{LC} - \gamma_L$$

L'expression de $\delta_{LC}$ est composée :

- d'un terme statique $(K_C\ \gamma_{LC} - K\ \gamma_L)$ qui dépend de l'écart entre la valeur d'accélération de consigne et la valeur d'accélération effectivement mesurée. Les constantes $K_C$ et $K$ sont des gains de correction constants. $K$ est le gain statique et $K_c$-$K$ l'avance de phase recherchée pour la correction.
- d'un terme dynamique $(- \mu r)$ qui permet d'améliorer la stabilité de la boucle d'asservissement. $\mu$ est le gain dynamique qui dépend lui aussi de la géométrie du projectile et des conditions de vol de celui ci, $r$ est la vitesse de rotation du projectile par rapport à l'axe de lacet.
- d'un terme intégral $H\ S(\gamma_L) = H\int(\gamma_{LC} - \gamma_L)dt$ qui permet d'améliorer la précision de la commande. $H$ est le gain intégral de l'asservissement.

Tous les coefficients $(K_c, K, \mu, H)$ dépendent de la géométrie du projectile et des conditions de vol de celui ci.
Le terme intégral pourrait éventuellement être omis mais il est généralement souhaitable pour améliorer la précision de la commande.
L'angle de braquage à commander en tangage s'écrit d'une façon analogue sous la forme de la somme :

$$\delta_{TC} = H\ S(\gamma_T) + (K_C\ \gamma_{TC} - K\ \gamma_T) + \mu q$$

Avec $S(\gamma_T)$ qui est la solution de l'équation intégrale :

$$dS(\gamma_T)/dt = \gamma_{TC} - \gamma_T$$

Et $q$ étant la vitesse de rotation du projectile par rapport à l'axe de tangage.
L'organigramme de la figure 2 montre l'élaboration concrète des consignes de braquage $\delta_{LC}$ et $\delta_{TC}$ à partir des données de consigne en accélération ($\gamma_{LC}$ et $\gamma_{TC}$), des mesures d'accélérations ($\gamma_L$ et $\gamma_T$) et des mesures de vitesses en lacet $r$ et en tangage $q$.
Il y a deux voies de calcul parallèles et totalement indépendantes l'une de l'autre. Une voie pour le calcul des consignes de braquage en tangage et une voie pour le calcul des consignes de braquage en lacet.
Le calcul utilise un module intégrateur Il pour chaque voie, quatre modules amplificateurs A1, A2, A3 et A4 pour chaque voie. Ces modules sont réglés aux différents gains souhaités $(K_c, K, \mu, H)$. Le calcul met enfin en oeuvre quatre modules sommateurs S1, S2, S3 et S4 pour chaque voie.
Les modules représentés ici pour la clarté de l'exposé sous forme de "boîtes fonctionnelles" sont bien entendu réalisés concrètement sous la forme d'instructions de programmation mises en mémoire et exécutées par un microprocesseur inclus dans le calculateur 11.
Un tel procédé de pilotage ne permet pas d'assurer une précision au sol suffisante pour un projectile girant.

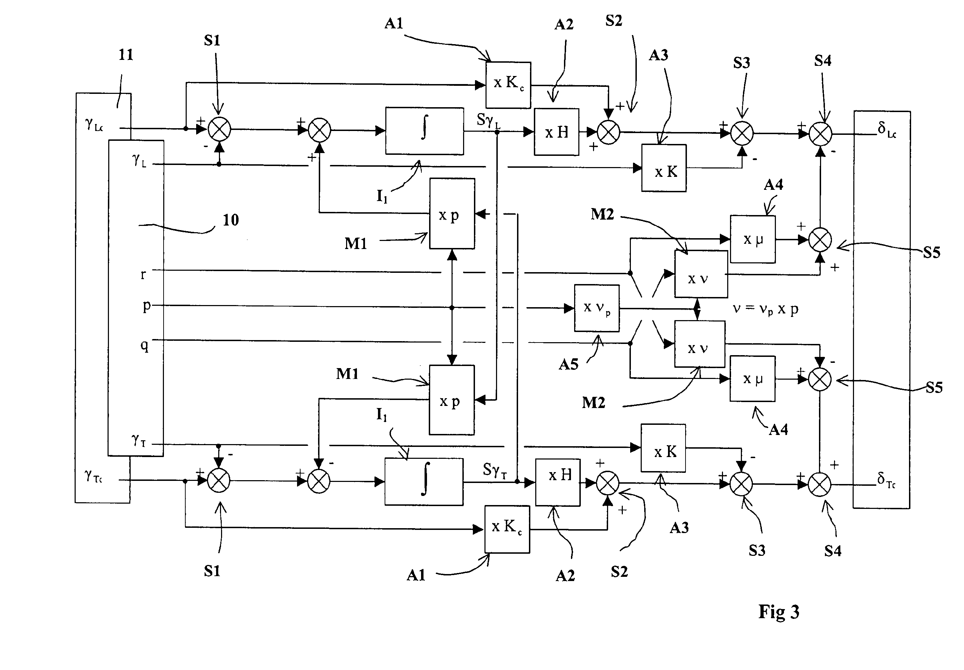

La figure 3 montre un organigramme schématisant un mode de réalisation du procédé de pilotage selon l'invention.
Là encore le calculateur électronique 11 élabore des consignes $\gamma_{LC}$ et $\gamma_{TC}$ d'accélérations souhaitées suivant les directions de lacet ($\gamma_{LC}$) et de tangage ($\gamma_{TC}$) à partir d'une loi de guidage, par exemple la loi de navigation proportionnelle.
Le calculateur 11 va transformer ces consignes d'accélération en consignes d'angles de braquage des gouvernes 8 de lacet et de tangage (angle de consigne de braquage en lacet : $\delta_{LC}$; angle de consigne de braquage en tangage : $\delta_{TC}$).
La loi de pilotage proposée par l'invention utilise les mesures d'accélérations en lacet et tangage effectuées en continu par la centrale inertielle 10. Elle utilise aussi les mesures effectuées par cette même centrale inertielle des vitesses de rotation du projectile 1 par rapport à l'axe de lacet (vitesse notée $r$), par rapport à l'axe de tangage (vitesse notée $q$) ainsi que la mesure de la vitesse de roulis $p$ du projectile (vitesse autour de l'axe Gx).

Conformément à l'invention on va faire intervenir dans le pilotage de chaque voie, à la fois la vitesse de roulis et des données relatives à l'autre voie.

Une telle disposition permettra de tenir compte dans l'asservissement de la gouverne de lacet (respectivement de tangage) de la variation de l'angle de tangage (respectivement de lacet). On tient compte ainsi des couplages potentiels entre les mouvements de tangage et de lacet qui sont induits par la rotation du projectile.

L'angle de braquage à commander en lacet s'écrit ainsi sous la forme de la somme :

$$\delta_{LC} = H\ S(\gamma_L) + (K_C\ \gamma_{LC} - K\ \gamma_L) - (\mu r + v_p p q)$$

Avec $S(\gamma_L)$ qui est la solution de l'équation intégrale :

$$dS(\gamma_L)/dt = \gamma_{LC} - \gamma_L + p\ S(\gamma_T)$$

L'expression de $\delta_{LC}$ comporte là encore :

- un terme statique $(K_C\ \gamma_{LC} - K\ \gamma_L)$ qui dépend de l'écart entre la valeur d'accélération de consigne et la valeur d'accélération effectivement mesurée. Ce terme statique est identique à celui de la loi décrite précédemment.
- un terme dynamique $-(\mu r + v_p p q)$ dans lequel intervient, en complément à la vitesse de lacet r, la vitesse de roulis p et la vitesse de tangage q. $v_p$ est un gain dynamique qui dépendra tout comme $\mu$ de la géométrie du projectile et des conditions de vol de celui ci,
- un terme intégral $H\ S(\gamma_L) = H\ \int(\gamma_{LC} - \gamma_L + P\ S(\gamma_T))\ dt$ qui permet d'améliorer la précision de la commande. H est le gain intégral de l'asservissement. L'invention introduit dans le terme intégral relatif au lacet la vitesse de roulis p et l'intégrale du terme intégral relatif au tangage. La précision du braquage tient alors compte des couplages tangage / lacet induits par le roulis.

Tous les coefficients $(K_c, K, \mu, H, v_p)$ dépendent de la géométrie du projectile et des conditions de vol de celui ci.

L'angle de braquage à commander en tangage s'écrit d'une façon analogue sous la forme de la somme :

$$\delta_{TC} = H\ S(\gamma_T) + (K_C\ \gamma_{TC} - K\ \gamma_T) + (\mu q - v_p p r)$$

Avec $S(\gamma_T)$ qui est la solution de l'équation intégrale :

$$dS(\gamma_T)/dt = \gamma_{TC} - \gamma_T - p\ S(\gamma_L)$$

On notera $v$ le produit $v_p p$ ($v = v_p p$).

L'organigramme de la figure 3 montre l'élaboration concrète des consignes de braquage $\delta_{LC}$ et $\delta_{TC}$ à partir des données de consigne en accélération ($\gamma_{LC}$ et $\gamma_{TC}$), des mesures d'accélérations ($\gamma_L$ et $\gamma_T$) et des mesures de vitesses en lacet r, tangage q, roulis r.

Les deux voies de calcul tangage et lacet ne sont plus indépendantes l'une de l'autre.

Le calcul utilise un module intégrateur I1 pour chaque voie, quatre modules amplificateurs A1, A2, A3 et A4 pour chaque voie, un module amplificateur complémentaire A5 commun aux deux voies est associé au gain en roulis vp. Ces modules sont réglés aux différents gains souhaités $(K_c, K, \mu, H, v_p)$.

Le calcul utilise aussi deux modules multiplicateurs M1 et M2 pour chaque voie. Ces modules assurent la prise en compte des couplages lacet/tangage. Chacun d'eux a deux entrées dont une pour la vitesse de roulis p et l'autre pour la grandeur à multiplier.

Le calcul met enfin en oeuvre six modules sommateurs S1, S2, S3, S4, S5 et S6 pour chaque voie.

Les modules représentés ici pour la clarté de l'exposé sous forme de "boîtes fonctionnelles" sont bien entendu réalisés concrètement sous la forme d'instructions de programmation mises en mémoire et exécutées par un microprocesseur inclus dans le calculateur 11.

Dans une seconde étape de réalisation de l'invention, à partir des consignes d'angle de braquage, on élabore les tensions électriques de commande des motoréducteur permettant l'entraînement des gouvernes de pilotage en lacet et en tangage.

Les motoréducteurs le plus souvent utilisés incorporent des moteurs couples alimentés en courant continu. En modifiant le niveau de la tension de commande du motoréducteur on peut modifier l'angle de braquage de la gouverne.

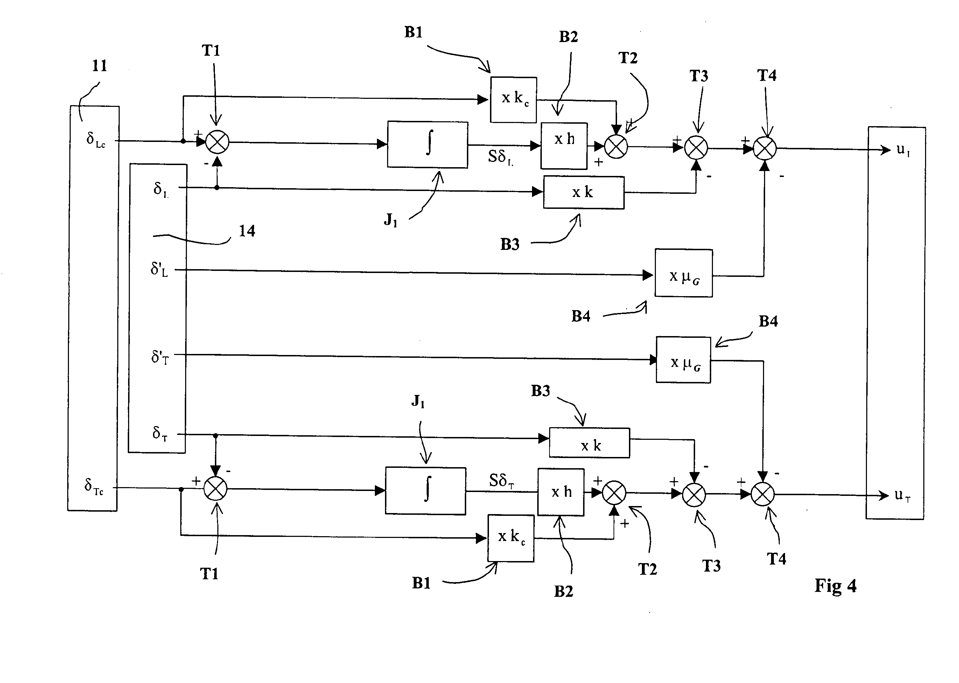

Une loi de commande classique pour un tel motoréducteur est schématisée à la figure 4.

Le calculateur électronique 11 élabore des consignes $\delta_{LC}$ et $\delta_{TC}$ d'angles de braquage souhaités pour les gouvernes de lacet ($\delta_{LC}$) et de tangage ($\delta_{TC}$). Cette élaboration s'effectue à partir du procédé de pilotage classique décrit dans la première étape (figure 2).

Il est possible, mais d'un intérêt pratique très limité, d'associer la première étape du procédé selon l'invention (figure 3) avec la loi de commande des gouvernes selon la figure 4. Cette combinaison ne permet pas d'alléger les motoréducteurs.

Ces consignes en braquage doivent être traduites dans le calculateur 11 en consignes de tension électrique de commande des motoréducteurs (tension de commande du motoréducteur de la gouverne de lacet : $u_L$; tension de commande du motoréducteur de la gouverne de tangage : $u_T$).

La loi de commande classique décrite ici utilise les mesures des angles de braquage réellement obtenus comme suite à la commande. On notera l'angle de braquage réel en lacet ($\delta_L$) et l'angle réel en tangage ($\delta_T$). La loi de commande utilise également une mesure des vitesses de braquage des gouvernes en lacet et tangage. Ces vitesses sont notées $\delta'_L$ pour la vitesse de braquage en lacet et $\delta'_T$ pour la vitesse de braquage en tangage. Le bloc 14 schématise les moyens de mesure. Les mesures des angles de braquage sont effectuées en continu avec des capteurs à effet Hall par exemple. Les mesures des vitesses de braquage sont réalisées par une mesure de la force contre électromotrice exercée par le motoréducteur. Les capteurs a effet Hall sont habituellement directement intégrés aux moto réducteurs du commerce afin de permettre l'asservissement de ces derniers.

Le bloc de mesure 14 fournit les informations souhaitées au calculateur embarqué 11.

La tension $u_L$ assurant la commande du braquage en lacet s'écrit ainsi sous la forme de la somme :

$$u_L \ = \ h \ S(\delta_L) \ + \ (k_C \ \delta_{LC} \ - \ k \ \delta_L) \ - \ \mu_G \ \delta'_L$$

Avec $S(\delta_L)$ qui est la solution de l'équation intégrale :

$$dS(\delta_L)/dt \ = \ \delta_{LC} \ - \ \delta_L$$

L'expression de $u_L$ est composée :

- d'un terme statique ($k_c \ \delta_{LC}$ - $k \ \delta_L$) qui dépend de l'écart entre l'angle de braquage de consigne et l'angle de braquage effectivement mesuré. Les constantes $k_c$ et $k$ sont des gains de correction constants. $k$ est le gain statique et $k_c$-$k$ l'avance de phase recherchée pour la correction.
- d'un terme dynamique (- $\mu_G \ \delta'_L$) qui permet d'améliorer la stabilité de la boucle d'asservissement. $\mu_G$ est le gain dynamique qui dépend des caractéristiques électriques et mécaniques du motoréducteur.
- d'un terme intégral h $S(\delta_L)$ = h $\int(\delta_{LC}$ - $\delta_L)$dt qui permet d'améliorer la précision de la commande. $h$ est le gain intégral de l'asservissement.

Tous les coefficients ($k_c$, $k$, $\mu_G$, $h$) dépendent des caractéristiques électriques et mécaniques du motoréducteur.

Le terme intégral pourrait éventuellement être omis mais il est souhaitable pour améliorer la précision de la commande.

La tension $u_T$ assurant la commande du braquage en tangage s'écrit d'une façon analogue sous la forme de la somme :

$$u_T \ = \ h \ S(\delta_T) \ + \ (k_C \ \delta_{TC} \ - \ k \ \delta_T) \ - \ \mu_G \ \delta'_T$$

Avec $S(\delta_T)$ qui est la solution de l'équation intégrale :

$$dS(\delta_T)/dt \ = \ \delta_{TC} \ - \ \delta_T$$

L'organigramme de la figure 4 montre l'élaboration concrète des tensions de commande $u_L$ et $u_C$ à partir des données de consigne d'angles de braquage ($\delta_{LC}$ et $\delta_{TC}$), des mesures d'angles de braquage ($\delta_L$ et $\delta_T$) et des mesures de vitesses de braquage en lacet ($\delta'_L$) et en tangage ($\delta'_T$).

Il y a deux voies de calcul parallèles et totalement indépendantes l'une de l'autre. Une voie pour le calcul des tensions de commande en tangage et une voie pour le calcul des tensions de commande en lacet.

Le calcul utilise un module intégrateur J1 pour chaque voie, quatre modules amplificateurs B1, B2, B3 et B4 pour chaque voie. Ces modules sont réglés aux différents gains souhaités ($k_c$, k, $\mu_G$, h). Le calcul met enfin en oeuvre quatre modules sommateurs T1, T2, T3 et T4 pour chaque voie.

Les modules représentés ici pour la clarté de l'exposé sous forme de "boîtes fonctionnelles" sont bien entendu réalisés concrètement sous la forme d'instructions de programmation mises en mémoire et exécutées par un microprocesseur inclus dans le calculateur 11.

Un tel procédé de commande, pour un projectile girant, impose l'emploi de motoréducteurs à fréquence propre élevée donc de taille et de coût importants et ayant une consommation de courant électrique élevée.

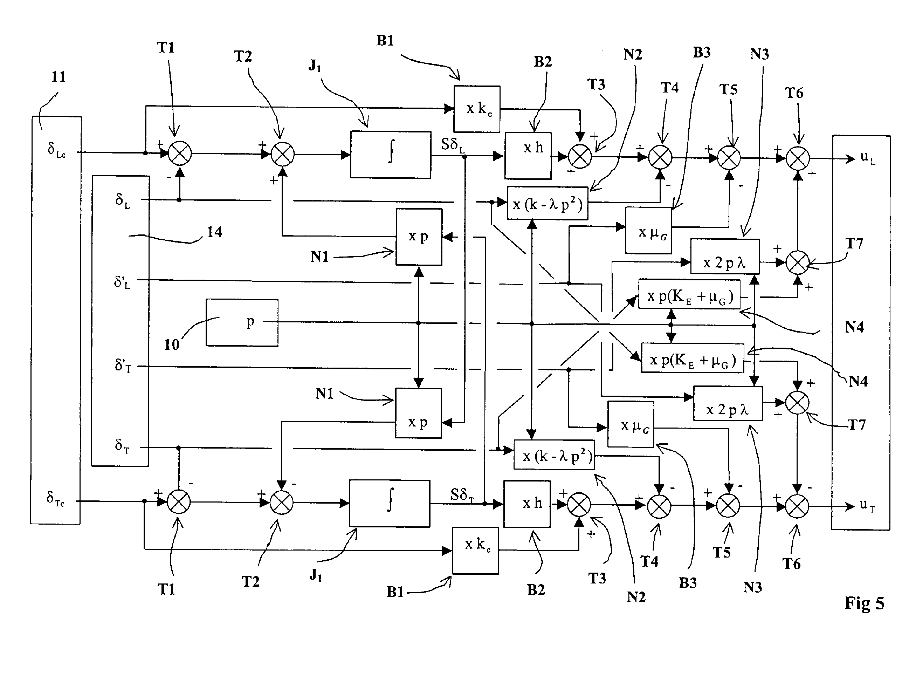

La figure 5 montre un organigramme schématisant un mode de réalisation du procédé de commande en tension selon l'invention.

Là encore le calculateur électronique 11 élabore des consignes $\delta_{LC}$ et $\delta_{TC}$ d'angles de braquage souhaités pour les gouvernes de lacet ($\delta_{LC}$) et de tangage ($\delta_{TC}$). Cette élaboration se fera à partir d'un procédé de pilotage et de préférence avec celui selon l'invention décrit précédemment en référence à la figure 3.

Il est possible, mais d'un intérêt très limité, d'associer le procédé de pilotage classique selon la figure 2 avec la loi de commande des gouvernes selon la figure 5. Cette combinaison ne permet pas néanmoins de pallier les mouvements perturbateurs dus à l'autorotation du projectile qui vont freiner le projectile et réduire la portée.

Ces consignes en braquage doivent être traduites dans le calculateur 11 en consignes de tension électrique de commande des motoréducteurs (tension de commande du motoréducteur de la gouverne de lacet : $u_L$; tension de commande du motoréducteur de la gouverne de tangage: $u_T$).

La loi de commande proposée par l'invention utilise comme la précédente les mesures des angles de braquage réellement obtenus comme suite à la commande. On note l'angle de braquage réel en lacet ($\delta_L$) et l'angle réel en tangage ($\delta_T$).

La loi de commande utilise également une mesure des vitesses de braquage des gouvernes en lacet ($\delta'_L$) et tangage ($\delta'_T$). Le bloc 14 schématise les moyens de mesure.

Conformément à l'invention la loi de commande utilise aussi la mesure, effectuée par la centrale inertielle 10, de la vitesse de roulis p du projectile (vitesse autour de l'axe Gx).

Conformément à l'invention on va faire intervenir dans la commande de chaque voie la vitesse de roulis ainsi que des données relatives à l'autre voie.

Une telle disposition permettra, dans la commande en tension du motoréducteur de la gouverne de lacet (respectivement de tangage), de tenir compte de la vitesse de rotation (p) ainsi que du braquage et des vitesses de braquage des gouvernes de tangage (respectivement de lacet). On compense ainsi les déphasages induits par la rotation du projectile

La tension de commande du braquage en lacet s'écrit ainsi sous la forme de la somme :

$$u_L = h\ S(\delta_L) + \{k_C\ \delta_{LC} - (k - \lambda\ p^2)\ \delta_L + p(K_E + \mu_G)\ \delta_T\ \}$$
$$- \mu_G\ \delta'_L + 2\ \lambda\ p\ \delta'_T$$

Avec $S(\delta_L)$ qui est la solution de l'équation intégrale :

$$dS(\delta_L)/dt = \delta_{LC} - \delta_L + p\ S(\delta_T)$$

L'expression de $u_L$ comporte là encore :

- **un terme statique** $\{k_C\ \delta_{LC} - (k - \lambda\ p^2)\ \delta_L + p(K_E + \mu_G)\delta_T\}$ qui dépend de l'écart entre l'angle de braquage de consigne et l'angle de braquage réel effectivement mesuré. Ce terme statique est complété par rapport à la loi précédente par un terme correctif prenant en compte la vitesse de roulis p et le braquage mesuré pour l'autre gouverne (tangage). Le coefficient $K_E$ est la constante équivalente de couple de chacun des motoréducteurs (moteurs à aimants permanents sans balai), et $\mu_G$ est un gain constant qui dépend des caractéristiques mécaniques et électriques du motoréducteur. Conformément à l'invention Le terme statique incorpore également un terme ($\lambda\ p^2$) de correction du gain statique k, terme qui est proportionnel au carré de la vitesse de roulis ($p^2$) (la valeur numérique du terme $\lambda$ $p^2$ est de l'ordre de 250 pour une autorotation de 10 t/s, c'est-à-dire supérieure à la valeur numérique de k (160) qu'il a pour fonction de corriger).

- **un terme dynamique** $(-\mu_G \delta'_L + 2 \lambda p \delta'_T)$ dans lequel intervient, en complément à la vitesse de braquage en lacet $\delta'_L$, la vitesse de roulis $p$ et la vitesse de braquage en tangage $\delta'_T$. $\lambda$ est un gain dynamique qui dépendra tout comme $\mu_G$ des caractéristiques électriques et mécaniques du motoréducteur.
- **un terme intégral** $h\, S(\delta_L) = h \int (\delta_{LC} - \delta_L + p\, S(\delta_T))\, dt$ qui permet d'améliorer la précision de la commande. $h$ est le gain intégral de l'asservissement. L'invention introduit donc dans le terme intégral relatif au lacet la vitesse de roulis et l'intégrale du terme intégral relatif au tangage. La précision de la commande du motoréducteur tient alors compte des couplages tangage / lacet induits par le roulis.

Tous les coefficients ($h$, $k_c$, $k$, $\mu_G$, $K_E$ et $\lambda$) dépendent des caractéristiques électriques et mécaniques du motoréducteur.

Notamment le paramètre $\lambda = R_E J_E / \rho K_E$, expression dans laquelle $R_E$ est la résistance équivalente de chacun des circuits d'alimentation de puissance, $J_E$ est le moment d'inertie de chacun des ensembles plan de gouverne et motoréducteur réduit sur l'axe des gouvernes, $K_E$ est la constante équivalente de couple de chacun des motoréducteurs (moteurs à aimants permanents sans balai), $\rho$ est le rendement mécanique de chacun des motoréducteurs.

De même la tension de commande du braquage en tangage s'écrit sous la forme de la somme :

$$u_T = h\, S(\delta_T) + \{k_C\, \delta_{TC} - (k - \lambda\, p^2)\, \delta_T + p(K_E + \mu_G)\, \delta_L\}$$
$$- \mu_G\, \delta'_T + 2\, \lambda\, p\, \delta'_L$$

Avec $S(\delta L)$ qui est la solution de l'équation intégrale :

$$dS(\delta_T)/dt = \delta_{TC} - \delta_T + p\, S(\delta_L)$$

L'organigramme de la figure 5 montre l'élaboration concrète des tensions de commande $u_L$ et $u_C$ à partir des données de consigne d'angles de braquage ($\delta_{LC}$ et $\delta_{TC}$), des mesures d'angles de braquage ($\delta_L$ et $\delta_T$), des mesures de vitesses de braquage en lacet ($\delta'_L$) et en tangage ($\delta'_T$) et de la mesure de la vitesse de roulis $p$ du projectile.

Les deux voies de calcul tangage et lacet ne sont plus indépendantes l'une de l'autre.

Le calcul utilise un module intégrateur J1 pour chaque voie, trois modules amplificateurs B1, B2 et B3 pour chaque voie. Ces modules sont réglés aux différents gains souhaités ($k_C$, $h$, $\mu_G$). Le calcul met en oeuvre trois multiplicateurs N1, N2, N3. Chacun d'eux a deux entrées dont une pour la vitesse de roulis $p$ et l'autre pour la grandeur à multiplier. Un coefficient de gain réglable est associé à certains multiplicateurs : ($K_E + \mu_G$) pour N2, $2\lambda$ pour N3.

Le multiplicateur N2 réalise la correction de gain statique, il assure l'élévation au carré de la vitesse de roulis $p$ puis le calcul de $k - \lambda\, p^2$ avant de faire le produit de cette expression avec l'angle de braquage mesuré considéré.

Le calculateur comporte enfin sept modules sommateurs T1, T2, T3, T4, T5, T6 et T7 pour chaque voie.

Les modules représentés ici pour la clarté de l'exposé sous forme de "boîtes fonctionnelles" sont bien entendu réalisés concrètement sous la forme d'instructions de programmation mises en mémoire et exécutées par un microprocesseur inclus dans le calculateur 11.

**Exemple numérique**

On a simulé la loi de commande en tension des gouvernes pour un motoréducteur ayant les caractéristiques techniques suivantes :

| | |
|---|---|
| Résistance équivalente $R_E$ | 8,14 $\Omega$ |
| Constante équivalente de couple $K_E$ | 0,6912 N.m / A |
| Inertie équivalente $J_E$ | 0,004 Kg m$^2$ |
| Rendement du réducteur $\rho$ | 0,75 |
| Intensité maximale sous 15 volts Imax | 1, 84 A |
| Couple maximal aux gouvernes sous 15 volts Cmax | 0,96 N.m |

Avec de telles valeurs les coefficients de la loi de commande des motoreducteurs sont les suivants :

| Coefficient | Valeur |
|---|---|
| h | 1233,51 V/s/rd |
| $\mu_G$ | 3,853 V.s/rd |
| k | 161,162 V/rd |
| $k_c$ | 121,499 V/rd |

Ce qui donne une durée d'amortissement inférieure à 0,1 s. Une telle valeur est excellente et assure un bon positionnement de la gouverne à la position recherchée et sans oscillations.

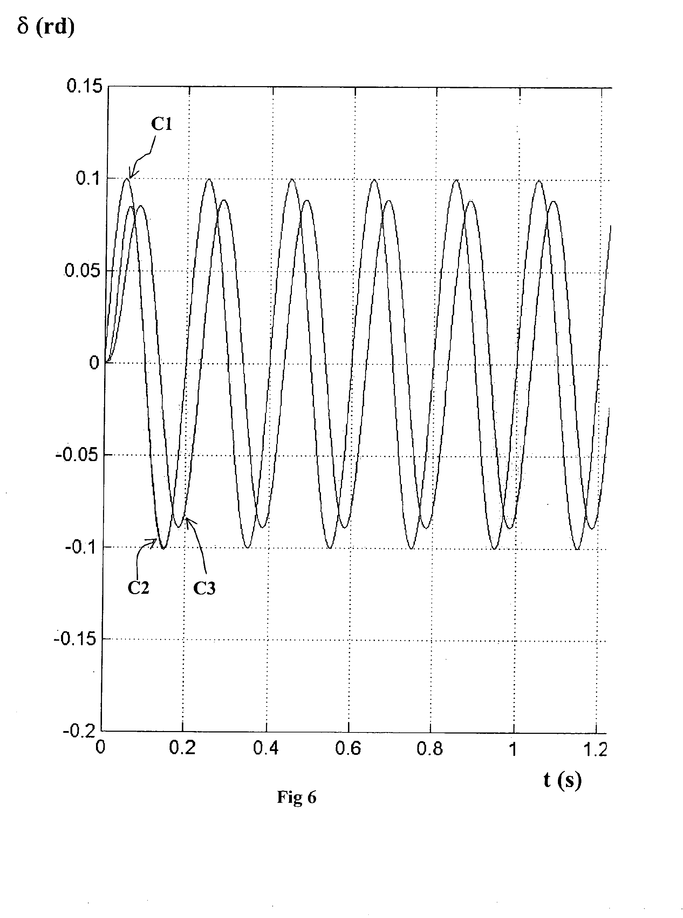

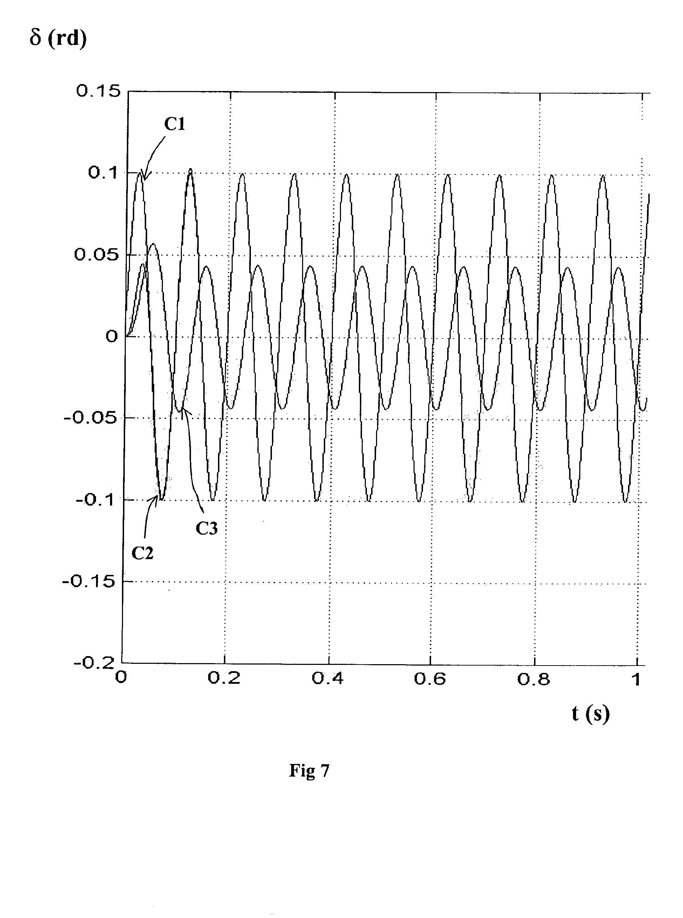

Les figures 6 et 7 montrent ainsi

pour deux vitesses de roulis du projectile (figure 6 : p=5 t/s, figure 7 : p=10 t/s), les réponses en braquage obtenues en réponse à une consigne de braquage de 0,1 rd modulée par le roulis du projectile.

Sur chaque figure la courbe C1 représente la consigne, la courbe C2 représente la réponse obtenue avec le procédé de commande en tension selon l'invention (tel que schématisé figure 5), la courbe C3 représente la réponse obtenue avec la commande en tension selon l'art antérieur (procédé selon la figure 4).

Pour les deux vitesses de roulis on constate une excellente recopie de la consigne lorsque la loi de commande selon l'invention est utilisée (la durée de la phase transitoire est inférieure à 0,1 s). Par contre, l'utilisation d'une loi de commande classique avec les motoréducteurs définis plus haut, conduit, surtout pour des vitesses de roulis importantes à des erreurs d'amplitude et surtout à des déphasages (supérieur à 90 °, en valeur absolue, pour des autorotations au moins égales à 7 t/s) rédhibitoires pour la stabilité du projectile.

Ces déphasages se traduisent par des braquages parasites qui déstabilisent le projectile en lui communiquant des mouvements pendulaires très mal amortis, dans le meilleur des cas, qui ralentissent le projectile et réduisent sensiblement sa portée. Pour des vitesses d'autorotation plus élevées, la loi conventionnelle de commande des gouvernes devient rapidement inopérante ce qui conduit à un échec de la mission.

Pour un projectile planant de calibre 141 mm en vol (tiré par un tube de 155mm) qui est piloté par deux plans canard (quatre gouvernes commandées deux par deux), projectile ayant une fréquence propre de mouvement pendulaire de l'ordre de 1 Hz, une vitesse d'autorotation moyenne de 5 Hz, et soumis à un vent aléatoire à distribution normale et moyenne nulle dans une direction donnée (valeurs numériques du vent données par la norme US MIL Std 201 B).

Le projectile est équipé d'une centrale inertielle équipée de gyromètres de roulis, tangage et lacet dont les erreurs sont indépendantes, normales et caractérisées par les écart-types suivant :

Biais (erreur à vitesse de rotation nulle) : 0,03 °/s
Proportionnalité : $0,4 \cdot 10^{-3}$

La centrale inertielle est également équipée d'accéléromètres dont les erreurs normales et indépendantes sont caractérisées par les écart-types suivants :

Biais (erreur à accélération nulle) : 0,1 m/s$^2$
Proportionnalité : $2 \cdot 10^{-3}$

Avec de telles données les coefficients des lois de pilotage classique et selon l'invention sont données par le tableau suivant :

| Coefficient | Valeur |
|---|---|
| H | 0,00985 s/m |
| $\mu$ | 0,094 s |
| K | 0,002 s$^2$/m |
| $K_C$ | 0,000585 s$^2$/m |
| $\nu_p$ | 0,001 |

On a réalisé une simulation du comportement piloté suivant un procédé de pilotage classique telle que décrit en référence aux figures 2 et 4 puis suivant le procédé proposé par l'invention et décrit en référence aux figures 3 et 5.

On a recherché :

- la portée cible maximale (Pmax) accessible avec une précision décamétrique par vent nul,
- la précision obtenue à 55 Km par les coups atteignant effectivement le voisinage de la cible (rayon du cercle équiprobable),
- la fiabilité du tir à 55 Km, c'est à dire la proportion du nombre de coups atteignant effectivement le voisinage de la cible.

Les résultats de la simulation numérique utilisant la méthode de Monte Carlo sont consignés dans le tableau suivant:

|  | Portée maximale Pmax | Précision à 55 Km | Fiabilité du tir à 55 Km |
|---|---|---|---|
| **Procédé de pilotage classique** | 58 Km | $\approx$ 15 m | $\approx$ 66 % |
| **Procédé de pilotage selon l'invention** | 65 Km | < 10 m | > 99 % |

On voit que le procédé de pilotage selon l'invention permet d'améliorer très notablement la fiabilité du tir tout en améliorant la précision et en augmentant la portée.

## Revendications

1. Procédé d'élaboration d'au moins un ordre de commande pour un organe permettant le pilotage en lacet d'un projectile girant, procédé dans lequel l'ordre de commande provoque une modification d'un paramètre de pilotage en lacet du projectile, paramètre que l'on cherche à maîtriser, procédé dans lequel on détermine une accélération de consigne en lacet $\gamma_{LC}$
   procédé dans lequel on mesure :

   - l'accélération en lacet $\gamma_L$,
   - la vitesse de rotation r du projectile par rapport à l'axe de lacet,
   - la vitesse de rotation q du projectile par rapport à l'axe de tangage, et
   - la vitesse angulaire de roulis p du projectile,

   procédé dans lequel l'ordre de commande est évalué comme la somme :

   - d'un terme statique $K_C\gamma_{LC}$ - $K\gamma_L$ où les constantes $K_C$ et K sont des gains de correction constants, K étant le gain statique et $K_c$-K l'avance de phase recherchée pour la correction, et
   - d'un terme dynamique -$\mu r$ - $\nu_p pq$ où les constantes et $\nu_p$ sont des gains dynamiques qui dépendent de la géométrie du projectile et des conditions de vol de celui-ci.

2. Procédé d'élaboration d'au moins un ordre de commande selon la revendication 1, **caractérisé en ce que**, lorsque l'ordre de commande comprend un terme intégral proportionnel à l'intégrale en fonction du temps des écarts entre les intensités mesurées et de consigne du paramètre de lacet à maîtriser, on introduit dans le terme intégral relatif au paramètre de lacet un terme correctif de couplage qui est proportionnel à la vitesse angulaire du projectile et au terme intégral relatif au paramètre de lacet.

3. Procédé d'élaboration d'au moins un ordre de commande selon une des revendications 1 ou 2, **caractérisé en ce que** l'ordre de commande est une consigne d'angle de braquage ($\delta_{LC}$,$\delta_{TC}$) pour une ailette de pilotage en lacet, la modification de la consigne de l'angle de braquage provoquant une modification d'un paramètre de pilotage qui est l'accélération angulaire ($\gamma_L$,$\gamma_T$) du projectile suivant l'axe de lacet dans un repère lié au projectile, les dérivées par rapport au temps desdites accélérations étant les vitesses de rotation du projectile (r, q) autour des axes de lacet, les angles de braquage s'exprimant ainsi de la façon suivante:

   consigne d'angle de braquage en lacet:

$$\delta_{LC} = H\ S(\gamma_L) + K_C\ \gamma_{LC} - K\ \gamma_L - (\mu r + \nu_p pq)$$

la variable $S(\gamma_L)$ des termes intégraux étant obtenue par intégration des fonctions suivantes :

$$dS(\gamma_L)/dt = \gamma_{LC} - \gamma_L + p\, S(\gamma_T)$$

expressions dans lesquelles: H, $K_c$, K, $\mu$ et $\nu_p$ sont des constantes qui dépendent de la géométrie du projectile et des conditions de vol de celui ci,
$\gamma_{LC}$ étant la consigne d'accélération à communiquer au projectile suivant les axes de lacet, ces consignes étant fournies par une loi de guidage.

4. Procédé d'élaboration d'au moins un ordre de commande selon une des revendications 1 ou 2, **caractérisé en ce que** l'ordre de commande est une tension électrique de commande ($U_L$, $U_T$) d'un motoréducteur d'entraînement d'une ailette dé pilotage en lacet, la modification de cette tension provoquant une modification d'un paramètre de pilotage qui est un angle de braquage ($\delta_L$, $\delta_T$) de l'ailette considérée, les dérivées par rapport au temps desdits angles de braquage étant notées ($\delta'_L$, $\delta'_T$), le procédé étant également **caractérisé en ce que** l'on introduit dans l'évaluation de la tension électrique de commande de l'ailette de pilotage en lacet un terme statique correctif de couplage qui est proportionnel à la vitesse angulaire de roulis et également proportionnel à l'angle de braquage en lacet et **en ce qu'**on introduit également dans le terme statique un coefficient correctif du gain statique qui est proportionnel au carré de la vitesse angulaire de roulis et à l'angle de braquage en lacet, les tensions de commande s'exprimant ainsi de la façon suivante:

tension de commande de l'ailette de pilotage en lacet :

$$u_L = h\, S(\delta_L) + k_C\, \delta_{LC} - (k - \lambda\, p^2)\, \delta_L + p(K_E + \mu_G)\, \delta_T - \mu_G\, \delta'_L + 2\, \lambda\, p\, \delta'_T$$

la variable $S(\delta_L)$ des termes intégraux étant obtenue par intégration des fonctions suivantes :

$$dS(\delta_L)/dt = \delta_{LC} - \delta_L + p\, S(\delta_T)$$

expressions dans lesquelles: h, $k_c$, k, $\mu_G$, $K_E$ et $\lambda$ sont des constantes qui dépendent du motoréducteur utilisé et des inerties commandées,
$\delta_{LC}$ étant la consigne d'angles de braquage à commander en lacet, ces consignes étant fournies par un moyen d'élaboration de consigne.

5. Procédé d'élaboration d'au moins un ordre de commande selon la revendication 4, **caractérisé en ce que** les consignes d'angles de braquage $\delta_{LC}$ à commander en lacet sont élaborées conformément au procédé selon la revendication 3.

6. Procédé d'élaboration d'au moins un ordre de commande pour un organe permettant le pilotage en tangage d'un projectile girant, procédé dans lequel l'ordre de commande provoque une modification d'un paramètre de pilotage en tangage du projectile, paramètre que l'on cherche à maîtriser, procédé dans lequel on détermine l'accélération de consigne en tangage $\gamma_{TC}$ procédé dans lequel on mesure :

- l'accélération en tangage $\gamma_T$,
- la vitesse de rotation r du projectile par rapport à l'axe de lacet ,
- la vitesse de rotation q du projectile par rapport à l'axe de tangage , et
- la vitesse angulaire de roulis p du projectile, procédé dans lequel l'ordre de commande est évalué comme la somme :
- d'un terme statique $K_C\gamma_{TC} - K\gamma_T$ où les constantes $K_c$ et K sont des gains de correction constants, K étant le gain statique et $K_c$-K l'avance de phase recherchée pour la correction, et
- d'un terme dynamique $-\mu q - \nu_p pr$ où les constantes $\mu$ et $\nu_p$ sont des gains dynamiques qui dépendent de la géométrie du projectile et des conditions de vol de celui-ci.

**7.** Procédé d'élaboration d'au moins un ordre de commande selon la revendication 6, **caractérisé en ce que**, lorsque l'ordre de commande comprend un terme intégral proportionnel à l'intégrale en fonction du temps des écarts entre les intensités mesurées et de consigne du paramètre de tangage à maîtriser, on introduit dans le terme intégral relatif au paramètre de tangage un terme correctif de couplage qui est proportionnel à la vitesse angulaire du projectile et au terme intégral relatif au paramètre de tangage.

**8.** Procédé d'élaboration d'au moins un ordre de commande selon une des revendications 6 ou 7, **caractérisé en ce que** l'ordre de commande est une consigne d'angle de braquage ($\delta_{TC}$) pour une ailette de pilotage en tangage, la modification de la consigne de l'angle de braquage provoquant une modification d'un paramètre de pilotage qui est l'accélération angulaire ($\gamma_T$) du projectile suivant, l'axe de tangage dans un repère lié au projectile, les dérivées par rapport au temps desdites accélérations étant les vitesses de rotation du projectile (r, q) autour des axes de tangage, les angles de braquage s'exprimant ainsi de la façon suivante:

Consigne d'angle de braquage en tangage:

$$\delta_{TC} \; = \; H \; S(\gamma_T) \; + \; K_C \; \gamma_{TC} \; - \; K \; \gamma_T \; + (\mu q \; - \; \nu_p pr)$$

la variable $S(\gamma_T)$ des termes intégraux étant obtenue par intégration des fonctions suivantes :

$$dS(\gamma_T)/dt \; = \; \gamma_{TC} \; - \; \gamma_T \; - \; p \; S(\gamma_L)$$

expressions dans lesquelles: H, $K_c$, K, $\mu$ et $\nu_p$ sont des constantes qui dépendent de la géométrie du projectile et des conditions de vol de celui ci,
$\gamma_{TC}$ étant la consigne d'accélération à communiquer au projectile suivant les axes de tangage, ces consignes étant fournies par une loi de guidage.

**9.** Procédé d'élaboration d'au moins un ordre de commande selon une des revendications 6 ou 7, **caractérisé en ce que** l'ordre de commande est une tension électrique de commande ($U_T$) d'un motoréducteur d'entraînement d'une ailette de pilotage en tangage, la modification de cette tension provoquant une modification d'un paramètre de pilotage qui est un angle de braquage ($\delta_T$) de l'ailette considérée, les dérivées par rapport au temps desdits angles de braquage étant notées ($\delta'_T$), le procédé étant également **caractérisé en ce que** l'on introduit dans l'évaluation de la tension électrique de commande de l'ailette de pilotage en tangage un terme statique correctif de couplage qui est proportionnel à la vitesse angulaire de roulis et également proportionnel à l'angle de braquage en tangage et **en ce qu'**on introduit également dans le terme statique un coefficient correctif du gain statique qui est proportionnel au carré de la vitesse angulaire de roulis et à l'angle de braquage en tangage, les tensions de commande s'exprimant ainsi de la façon suivante:

tension de commande de l'ailette de pilotage en tangage :

$$u_T = h \; S(\delta_T) \; + \; k_C \; \delta_{TC} \; - \; (k- \; \lambda \; p^2) \; \delta_T \; - \; p(K_E \; + \; \mu_G) \; \delta_L \; - \; \mu_G \; \delta'_T \; - \; 2 \; \lambda \; p \; \delta'_L$$

la variable $S(\delta_T)$ des termes intégraux étant obtenue par intégration des fonctions suivantes :

$$dS(\delta_T)/dt \; = \; \delta_{TC} \; - \; \delta_T \; - \; p \; S(\delta_L)$$

expressions dans lesquelles: h, $k_c$, k, $\mu_G$, $K_E$ et $\lambda$ sont des constantes qui dépendent du motoréducteur utilisé et des inerties commandées,
$\delta_{TC}$ étant la consigne d'angles de braquage à commander en tangage, ces consignes étant fournies par un moyen d'élaboration de consigne.

**10.** Procédé d'élaboration d'au moins un ordre de commande selon la revendication 9, **caractérisé en ce que** la consigne d'angles de braquage $\delta_{TC}$ à commander tangage est élaborée conformément au procédé selon la revendication 8.

**Patentansprüche**

1.  Verfahren zur Ausarbeitung von mindestens einem Steuerbefehl für ein Organ, welches die Giersteuerung eines sich drehenden Projektils ermöglicht, wobei bei dem Verfahren der Steuerbefehl eine Modifikation eines Parameters der Giersteuerung des Projektils bewirkt, wobei man um die Kontrolle des Parameters bemüht ist, wobei bei dem Verfahren eine Soll-Gierbeschleunigung $\gamma_{LC}$ festgelegt wird,
    wobei bei dem Verfahren Folgendes gemessen wird:

    - die Gierbeschleunigung $\gamma_L$,
    - die Drehgeschwindigkeit r des Projektils in Bezug auf die Gierachse,
    - die Drehgeschwindigkeit q des Projektils in Bezug auf die Nickachse, und
    - die Roll-Winkelgeschwindigkeit p des Projektils,

    wobei bei dem Verfahren der Steuerbefehl abgeschätzt wird als die Summe aus:

    - einem statischen Ausdruck $K_C\gamma_{LC} - K\gamma_L$, wo die Konstanten $K_c$ und K konstante Korrekturverstärkungen sind, wobei K die statische Verstärkung ist und $K_c$-K der gewünschte Phasenvorlauf für die Korrektur ist, und
    - einem dynamischen Ausdruck $-\mu r - \nu_p pq$, wo die Konstanten $\mu$ und $\nu_p$ dynamische Verstärkungen sind, welche von der Geometrie des Projektils und von dessen Flugbedingungen abhängen.

2.  Verfahren zur Ausarbeitung von mindestens einem Steuerbefehl nach Anspruch 1, **dadurch gekennzeichnet, dass**, wenn der Steuerbefehl einen Integralausdruck aufweist, welcher proportional zum Integral in Funktion der Zeit der Abstände zwischen den gemessenen Intensitäten und des zu kontrollierenden Sollwerts des Gierparameters ist, in den Integralausdruck bezüglich des Gierparameters ein korrektiver Kopplungsausdruck eingeführt wird, welcher proportional zur Winkelgeschwindigkeit des Projektils und zum Integralausdruck bezüglich des Gierparameters ist.

3.  Verfahren zur Ausarbeitung von mindestens einem Steuerbefehl nach einem der Ansprüche 1 oder 2, **dadurch gekennzeichnet, dass** der Steuerbefehl ein Sollwert eines Anstellwinkels ($\delta_{LC}$, $\delta_{TC}$) für einen Giersteuerflügel ist, wobei die Modifikation des Sollwerts des Anstellwinkels eine Modifikation eines Steuerungsparameters bewirkt, welcher die Winkelbeschleunigung ($\gamma_L$, $\gamma_T$) des Projektils gemäß der Gierachse in einem mit dem Projektil verbundenen Koordinatensystem ist, wobei die Ableitungen nach der Zeit der genannten Beschleunigungen die Drehgeschwindigkeiten des Projektils (r, q) um die Gierachsen sind, wobei sich die Anstellwinkel somit in der folgenden Weise zum Ausdruck bringen:

    Sollwert des Gieranstellwinkels:

    $$\delta_{LC} = H \ S(\gamma_L) + K_C \ \gamma_{LC} - K \ \gamma_L - (\mu r + \nu_p pq)$$

    wobei die Variable $S(\gamma_L)$ der Integralausdrücke durch Integration der folgenden Funktionen erzielt wird:

    $$dS(\gamma_L)/dt = \gamma_{LC} - \gamma_L + p \ S \ (\gamma_T)$$

    bei welchen Angaben: H, $K_c$, K, $\mu$ et $\nu_p$ Konstanten sind, welche von der Geometrie des Projektils und von dessen Flugbedingungen abhängen,
    wobei $\gamma_{LC}$ der dem Projektil zu kommunizierender Beschleunigungssollwert gemäß der Gierachsen ist, wobei diese Sollwerte durch eine Führungsvorschrift bereitgestellt werden.

4.  Verfahren zur Ausarbeitung von mindestens einem Steuerbefehl nach einem der Ansprüche 1 oder 2, **dadurch gekennzeichnet, dass** der Steuerbefehl eine elektrische Steuerspannung ($U_L$, $U_T$) eines Getriebemotors zum Antrieb eines Flügels zur Giersteuerung ist, wobei die Modifikation dieser Spannung eine Modifikation eines Steuerungsparameters bewirkt, welcher ein Anstellwinkel ($\delta_L$, $\delta_T$) des betreffenden Flügels ist, wobei die Ableitungen nach der Zeit der genannten Einstellwinkel als ($\delta'_L$, $\delta'_T$) bezeichnet sind, wobei das Verfahren auch **dadurch gekennzeichnet ist, dass** bei der Ausarbeitung der elektrischen Steuerspannung des Flügels zur Giersteuerung ein statischer korrektiver Kopplungsausdruck eingeführt wird, welcher proportional zur Roll-Winkelgeschwindigkeit und auch proportional zum Giereinstellwinkel ist, und dass in den statischen Ausdruck auch ein korrektiver Koeffizient der statischen Verstärkung eingeführt wird, welcher proportional zum Quadrat der Roll-Winkelgeschwindigkeit und zum Giereinstellwinkel ist, wobei sich die Steuerspannungen somit in der folgenden Weise zum Ausdruck bringen:

Steuerspannung des Flügels zur Giersteuerung:

$$u_L = h\ S(\delta_L) + k_C\ \delta_{LC} - (k - \lambda\ p^2)\ \delta_L + p(K_E + \mu_G)\ \delta_T - \mu_G\ \delta'_L + 2\ \lambda\ p\ \delta'_T$$

wobei die Variable $S(\delta_L)$ der integralen Ausdrücke durch Integration der folgenden Funktionen erzielt werden:

$$dS(\delta_L)/dt = \delta_{LC} - \delta_L + p\ S\ (\delta_T)$$

bei welchen Angaben: h, $k_c$, k, $\mu_G$, $K_E$ und $\lambda$ Konstanten sind, welche von dem verwendeten Getriebemotor und den gesteuerten Trägheiten abhängen,
wobei $\delta_{LC}$ der Sollwert der zu steuernden Gieranstellwinkel ist, wobei diese Sollwerte durch ein Mittel zur Sollwertausarbeitung bereitgestellt werden.

5. Verfahren zur Ausarbeitung von mindestens einem Steuerbefehl nach Anspruch 4, **dadurch gekennzeichnet, dass** die Sollwerte von zu steuernden Gieranstellwinkeln $\delta_{LC}$ gemäß dem Verfahren nach Anspruch 3 ausgearbeitet werden.

6. Verfahren zur Ausarbeitung von mindestens einem Steuerbefehl für ein Organ, welches die Nicksteuerung eines sich drehenden Projektils ermöglicht, wobei bei dem Verfahren der Steuerbefehl eine Modifikation eines Parameters der Nicksteuerung des Projektils bewirkt, wobei man um die Kontrolle des Parameters bemüht ist, wobei bei dem Verfahren eine Soll-Nickbeschleunigung $\gamma_{TC}$ festgelegt wird,
wobei bei dem Verfahren Folgendes gemessen wird:

- die Nickbeschleunigung $\gamma_T$,
- die Drehgeschwindigkeit r des Projektils in Bezug auf die Gierachse,
- die Drehgeschwindigkeit q des Projektils in Bezug auf die Nickachse, und
- die Roll-Winkelgeschwindigkeit p des Projektils,

wobei bei dem Verfahren der Steuerbefehl abgeschätzt wird als die Summe aus:

- einem statischen Ausdruck $K_C\gamma_{TC}$ - $K\gamma_T$, wo die Konstanten $K_C$, und K konstante Korrekturverstärkungen sind, wobei K die statische Verstärkung ist und $K_c$ - K der gewünschte Phasenvorlauf für die Korrektur ist, und
- einem dynamischen Ausdruck $-\mu_pq$ - $\nu_ppr$, wo die Konstanten $\mu$ und $\nu_p$ dynamische Verstärkungen sind, welche von der Geometrie des Projektils und von dessen Flugbedingungen abhängen.

7. Verfahren zur Ausarbeitung von mindestens einem Steuerbefehl nach Anspruch 6, **dadurch gekennzeichnet, dass**, wenn der Steuerbefehl einen Integralausdruck aufweist, welcher proportional zum Integral in Funktion der Zeit der Abstände zwischen den gemessenen Intensitäten und des zu kontrollierenden Sollwerts des Nickparameters ist, in den Integralausdruck bezüglich des Nickparameters ein korrektiver Kopplungsausdruck eingeführt wird, welcher proportional zur Winkelgeschwindigkeit des Projektils und zum Integralausdruck bezüglich des Nickparameters ist.

8. Verfahren zur Ausarbeitung von mindestens einem Steuerbefehl nach einem der Ansprüche 6 oder 7, **dadurch gekennzeichnet, dass** der Steuerbefehl ein Sollwert eines Anstellwinkels ($\delta_{TC}$) für einen Nicksteuerflügel ist, wobei die Modifikation des Sollwerts des Anstellwinkels eine Modifikation eines Steuerungsparameters bewirkt, welcher die Winkelbeschleunigung ($\gamma_T$) des Projektils gemäß der Nickachse in einem mit dem Projektil verbundenen Koordinatensystem ist, wobei die Ableitungen nach der Zeit der genannten Beschleunigungen die Drehgeschwindigkeiten des Projektils (r, q) um die Nickachsen sind, wobei sich die Anstellwinkel somit in der folgenden Weise zum Ausdruck bringen:

Sollwert des Nickanstellwinkels:

$$\delta_{TC} = H\ S(\gamma_T)\ +\ K_C\ \gamma_{TC}\ -\ K\ \gamma_T\ -\ (\mu q\ +\ \nu_p p r)$$

wobei die Variable $S(\gamma_T)$ der Integralausdrücke durch Integration der folgenden Funktionen erzielt wird:

$$dS(\gamma_T)/dt\ =\ \gamma_{TC}\ -\ \gamma_T\ +\ p\ S(\gamma_L)$$

bei welchen Angaben: H, $K_c$, K, $\mu$ et $\nu_p$ Konstanten sind, welche von der Geometrie des Projektils und von dessen Flugbedingungen abhängen,
wobei $\gamma_{TC}$ der dem Projektil zu kommunizierender Beschleunigungssollwert gemäß der Nickachsen ist, wobei diese Sollwerte durch eine Führungsvorschrift bereitgestellt werden.

9. Verfahren zur Ausarbeitung von mindestens einem Steuerbefehl nach einem der Ansprüche 6 oder 7, **dadurch gekennzeichnet, dass** der Steuerbefehl eine elektrische Steuerspannung ($U_T$) eines Getriebemotors zum Antrieb eines Flügels zur Nicksteuerung ist, wobei die Modifikation dieser Spannung eine Modifikation eines Steuerungsparameters bewirkt, welcher ein Anstellwinkel ($\delta_T$) des betreffenden Flügels ist, wobei die Ableitungen nach der Zeit der genannten Einstellwinkel als ($\delta'_T$) bezeichnet sind, wobei das Verfahren auch **dadurch gekennzeichnet ist, dass** bei der Ausarbeitung der elektrischen Steuerspannung des Flügels zur Nicksteuerung ein statischer korrektiver Kopplungsausdruck eingeführt wird, welcher proportional zur Roll-Winkelgeschwindigkeit und auch proportional zum Nickeinstellwinkel ist, und dass in den statischen Ausdruck auch ein korrektiver Koeffizient der statischen Verstärkung eingeführt wird, welcher proportional zum Quadrat der Roll-Winkelgeschwindigkeit und zum Nickeinstellwinkel ist, wobei sich die Steuerspannungen somit in der folgenden Weise zum Ausdruck bringen:

Steuerspannung des Flügels zur Nicksteuerung:

$$u_T = h\ S(\delta_T)\ +\ k_C\ \delta_{TC}\ -\ (k-\ \lambda\ p^2)\ \delta_T\ +\ p(K_E\ +\ \mu_G)\ \delta_L\ -\ \mu_G\ \delta'_T\ -\ 2\ \lambda\ p\ \delta'_L$$

wobei die Variable $S(\delta_T)$ der integralen Ausdrücke durch Integration der folgenden Funktionen erzielt werden:

$$dS(\delta_T)/dt\ =\ \delta_{TC}\ -\ \delta_T\ +\ p\ S\ (\delta_L)$$

bei welchen Angaben: h, $k_C$, k, $\mu_G$, $K_E$ und $\lambda$ Konstanten sind, welche von dem verwendeten Getriebemotor und den gesteuerten Trägheiten abhängen,
wobei $\delta_{LC}$ der Sollwert der zu steuernden Nickanstellwinkel ist, wobei diese Sollwerte durch ein Mittel zur Sollwertausarbeitung bereitgestellt werden.

10. Verfahren zur Ausarbeitung von mindestens einem Steuerbefehl nach Anspruch 9, **dadurch gekennzeichnet, dass** der Sollwert von zu steuernden Nickeinstellwinkeln $\delta_{TC}$ gemäß dem Verfahren nach Anspruch 8 ausgearbeitet wird.

**Claims**

1. A process to prepare at least one control order for an organ allowing the yaw piloting of a spinning projectile, process in which the control order causes the modification of one parameter of the yaw piloting of the projectile, such parameter being required to be controlled, process in which the acceleration value is determined in yaw $\gamma_{LC}$ process in which is measured:

   - the acceleration value in yaw $\gamma_L$,

- the spin rate r of the projectile with respect to the yaw axis,
- the spin rate q of the projectile with respect to the pitch axis, and
- the angular rate p of roll of the projectile,

process in which the control order is evaluated as the sum of:

- a static term $K_C \gamma_{LC} - K \gamma_L$ where the constants $K_C$ and $K$ are constant correction gains, $K$ the static gain and $K_c$-$K$ the phase lead required for the correction,
- a dynamic term $-\mu r - \nu_p pq$ in which the constants $\mu$ and up are dynamic gain depending on the projectile's geometry and its flight conditions.

2. A process to prepare at least one control order according to Claim 1, characterised, when the control order comprises an integral term proportional to the integral as a function of the time of the deviations between the intensities measured and indexed of the yaw parameter to be controlled, a corrective coupling term is introduced into the integral term related to the yaw parameter that is proportional to the angular velocity of the projectile and to the integral term related to the yaw parameter.

3. A process to prepare at least one control order according to one of Claims 1 or 2, **characterised in that** the control order is a deflection angle index value ($\delta_{LC}$, $\delta_{TC}$) for a yaw piloting fin, the modification of the deflection angle index value causing the modification of a piloting parameter, namely that of the angular acceleration ($\gamma_L$, $\gamma_T$) of the projectile according to the yaw axis at a reference linked to the projectile, the deviations over time of said accelerations being the projectile's spin rate (r, q) about the yaw axis, the deflection angles are thus expressed as follows:

Yaw deflection angle index value:

$$\delta_{LC} = H\ S(\gamma_L)\ +\ K_C\ \gamma_{LC}\ -\ K\ \gamma_L\ -\ (\mu r\ +\ \nu_p pq),$$

the variables $S(\gamma_L)$ of the integral terms being obtained via the integration of the following function:

$$dS(\gamma_L)\ /\ dt\ =\ \gamma_{LC}\ -\ \gamma_L\ +\ p\ S(\gamma_T),$$

expression in which: H, $K_C$, K, $\mu$ and $\nu_p$ are constants that depend on the geometry of the projectile and its flight conditions,
$\gamma_{LC}$ being index value of the acceleration to be transmitted to the projectile according to the yaw axis, these values being supplied by a guidance rule.

4. A process to prepare at least one control order according to one of Claims 1 or 2, **characterised in that** the control order is an electrical control voltage ($U_L$, $U_T$) for a back-geared motor driving a yaw piloting fin, any modification of this voltage causing a modification of a piloting parameter that is a deflection angle ($\delta_L$, $\delta_T$) of the fin in question, any drift from the time of said deflection angles being noted ($\delta'_L$, $\delta'_T$), process also **characterised in that** a static corrective coupling term that is proportional to the angular rate of roll and also proportional to the yaw deflection angle is introduced into the electrical control voltage for a yaw piloting fin and **in that** a corrective coefficient of the static gain that is proportional to the angular rate of roll squared and to the yaw deflection angle is also introduced into the static term, the control voltages are thus expressed as follows:

control voltage of the yaw piloting fin:

$$u_L\ =\ h\ S(\delta_L)\ +\ k_c\delta_{LC}\ -\ (k\ -\ \lambda p^2)\delta_L\ +\ p(K_E\ +\ \mu_G)\delta_T\ -\ \mu_G\ \delta'_L\ +\ 2\ \lambda\ p\ \delta'_T$$

the variable $S(\delta_L)$ of the integral terms being obtained by integrating the following functions:

$$dS(\delta_L)/dt\ =\ \delta_{LC}\ -\ \delta_L\ +\ p\ S\ (\delta_T),$$

expression in which: h, kc, k, $\mu_G$, $K_E$ and $\lambda$ are constants that depend on the back-geared motor being used and the inertias controlled,
$\delta_{LC}$ being deflection angle index value to be controlled for yaw, these index values being supplied by index value formulation means.

5. A process to prepare at least one control order according to Claim 4, **characterised in that** the deflection angle index values $\delta_{LC}$ to be controlled in yaw are formulated in accordance with the process according to Claim 3.

6. A process to prepare at least one control order for an organ allowing the pitch piloting of a spinning projectile, process in which the control order causes the modification of one parameter of the pitch piloting of the projectile, such parameter being required to be controlled, process in which the acceleration of the value in pitch is determined, process in which is measured:

   - the acceleration value in pitch $\gamma_T$,
   - the spin rate r of the projectile with respect to the pitch axis,
   - the spin rate q of the projectile with respect to the roll axis, and
   - the angular rate p of roll of the projectile,

   process in which the control order is evaluated as the sum of:

   - a static term $K_C\gamma_{TC}$- $K\gamma_T$ where the constants $K_c$ and K are constant correction gains, K the static gain and $K_c$-K the phase lead required for the correction,
   - a dynamic term -$\mu q$ - $\nu_p pr$ in which the constants $\mu$ and up are dynamic gain depending on the projectile's geometry and its flight conditions.

7. A process to prepare at least one control order according to Claim 6, characterised, when the control order comprises an integral term proportional to the integral as a function of the time of the deviations between the intensities measured and indexed of the pitch parameter to be controlled, a corrective coupling term is introduced into the integral term related to the pitch parameter that is proportional to the angular velocity of the projectile and to the integral term related to the pitch parameter.

8. A process to prepare at least one control order according to one of Claims 6 or 7, **characterised in that** the control order is a deflection angle index value ($\delta_{TC}$) for a pitch piloting fin, the modification of the deflection angle index value causing the modification of a piloting parameter, namely that of the angular acceleration ($\gamma_T$) of the projectile according to the pitch axis at a reference linked to the projectile, the deviations over time of said accelerations being the projectile's spin rate (r, q) about the pitch axis, the deflection angles are thus expressed as follows:

   pitch deflection angle index value:

$$\delta_{TC} \;=\; H\ S(\gamma_T)\ +\ K_C\ \gamma_{TC}\ -\ K\ \gamma_T\ -\ (\mu q\ +\ \nu_p pr),$$

   the variables $S(\gamma_T)$ of the integral terms being obtained via the integration of the following function:

$$dS(\gamma_T)/dt \;=\; \gamma_{TC}\ -\ \gamma_T\ +\ p\ S(\gamma_L),$$

   expression in which: H, Kc, K, $\mu$ and $\nu_p$ are constants that depend on the geometry of the projectile and its flight conditions,
   $\gamma_{TC}$ being index value of the acceleration to be transmitted to the projectile according to the pitch axis, these values being supplied by a guidance rule.

9. A process to prepare at least one control order according to one of Claims 6 or 7, **characterised in that** the control order is an electrical control voltage ($U_T$) for a back-geared motor driving a pitch piloting fin, any modification of this voltage causing a modification of a piloting parameter that is a deflection angle ($\delta_T$) of the fin in question, any drift from the time of said deflection angles being noted ($\delta'_T$), process also **characterised in that** a static corrective coupling term that is proportional to the angular rate of roll and also proportional to the pitch deflection angle is introduced into the electrical control voltage for a pitch piloting fin and **in that** a corrective coefficient of the static gain that is proportional to the angular rate of roll squared and to the pitch deflection angle is also introduced into the static term, the control voltages are thus expressed as follows:

control voltage of the pitch piloting fin:

$$u_T = h\ S(\delta_T) + k_c\delta_{TC} - (k - \lambda p^2)\delta_T + p(K_E + \mu_G)\delta_L - \mu_G\ \delta'_T - 2\ \lambda\ p\ \delta'_T$$

the variable $S(\delta_T)$ of the integral terms being obtained by integrating the following functions:

$$dS(\delta_T)/dt = \delta_{TC} - \delta_T + p\ S\ (\delta_L)$$

expression in which: h, kc, k, $\mu_G$, $K_E$ and $\lambda$ are constants that depend on the back-geared motor being used and the inertias controlled,
$\delta_{TC}$ being deflection angle index value to be controlled for pitch, these index values being supplied by index value formulation means.

**10.** A process to prepare at least one control order according to Claim 9, **characterised in that** the deflection angle index values $\delta_{TC}$ to be controlled in pitch are formulated in accordance with the process according to Claim 8.

Fig 1

EP 1 422 587 B1

Fig 2

Fig 3

Fig 4

25

Fig 5

EP 1 422 587 B1

26

**Fig 6**

δ (rd)

Fig 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2786561
- EP 905473 A
- US 4234142 A
- US 4797829 A
- US 4697768 A
- DE 4025515